# EUROPEAN PATENT APPLICATION

(11) **EP 1 925 950 A1**
(43) Date of publication of application: **28.05.2008**
(21) Application number: 07254168.3
(22) Date of filing: 19.10.2007
(51) Int. Cl.: G01W 1/02, G01W 1/10, G09F 19/12

(54) **Weather station**

(30) Priority: 22.11.2006 US 562677
(71) Applicant: IDT-LCD Holdings (BVI) Limited, Tortola, British Virgin Islands (VG)
(72) Inventor: Chan, Raymond, Kowloon Hong Kong (CN)
(74) Representative: Martin, David John

(57) **Abstract**

A weather station for determining and indicating weather data including weather forecast, comprises a base (100), three LEDs (131-133) in the base (100), and a microprocessor-based operating circuit (300) in the base (100) for operation and control, including determining weather data and operating the LEDs (131-133). There is a crystal indicator (200) supported on the base (100) for illumination by the LEDs (131-133) to indicate weather forecast determined by the operating circuit (300). The indicator (200) includes three graphical weather images (201-203) etched therein by laser for selective illumination by the LEDs (131-133) to indicate a respective "Sunny", "Cloudy" or "Rainy" forecast of the weather.

## Description

The present invention relates to a weather station for indicating weather conditions, and in particular weather forecast.

### BACKGROUND OF THE INVENTION

Weather stations (or monitors) for indicating weather conditions are generally known, which may incorporate other functions or be included as part or a function of an equipment of another type and in particular a clock. In such apparatus, weather forecast is often indicated on an LCD display, and this is found to be uninteresting or monotonous to read.

The invention seeks to obviate or at least alleviate such shortcoming by providing new or improved weather station.

### SUMMARY OF THE INVENTION

According to the invention, there is provided a weather station for determining and indicating weather data including weather forecast, comprising a base, at least one light source located in the base, and a microprocessor-based operating circuit provided in the base for operation and control, including determining weather data and operating the light source. There is an indicator supported on the base for illumination by the light source to indicate weather forecast determined by the operating circuit. The indicator comprises a plurality of elements for selective illumination by the light source to indicate a respective forecast of the weather.

Preferably, wherein the indicator has a body made of a material selected from a transparent material and a translucent material.

More preferably, the elements are located wholly within the body of the indicator.

Further more preferably, the elements comprise respective hollow images formed within the body of the indicator, each image representing a respective forecast of the weather.

In a preferred embodiment, the elements are graphical images graphically representing sunny, cloudy and rainy forecast of the weather respectively.

More preferably, the indicator has a body made of a mass of material selected from a transparent material and a translucent material, and the graphical images comprise 3-dimensional images etched by laser inside the mass of material of the indicator.

It is preferred that the light source comprises a light emitting diode.

It is preferred that the weather station includes a plurality of light sources in the base for illuminating the elements respectively.

It is further preferred that the light sources are located in the base at different positions, and the elements are aligned with the light sources for illumination by the light sources respectively.

It is further preferred that the light sources are arranged in a linear row.

In a preferred embodiment, the light source is capable of emitting light of different colors, and the operating circuit operatively changes the color of the light of the light source to illuminate the elements in a color-changing manner.

More preferably, the light source comprises a tri-color RGB light emitting diode.

It is preferred that the base includes a built-in display operated by the operating circuit for displaying weather data determined by the operating circuit.

It is further preferred that the operating circuit includes a temperature sensor for sensing temperature as one of weather data determined by the operating circuit, the temperature being operatively displayed on the display.

Preferably, the operating circuit further includes a clock circuit for keeping time, the time being operatively displayed on the display.

Preferably, the operating circuit includes a clock circuit for keeping time, and the base includes a built-in display operated by the operating circuit for displaying time from the clock circuit.

### BRIEF DESCRIPTION OF DRAWINGS

The invention will now be more particularly described, by way of example only, with reference to the accompanying drawings, in which:

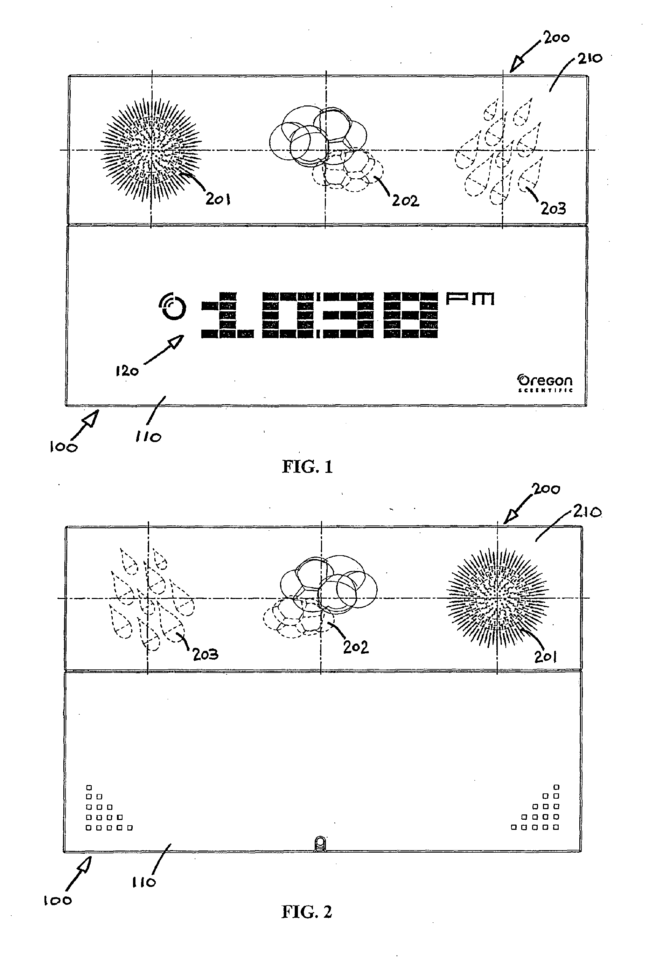

Figure 1 is a front view of an embodiment of a weather station in accordance with the invention, the weather station having a base and an indicator on the base;
Figure 2 is a rear view of the weather station of Figure 1;

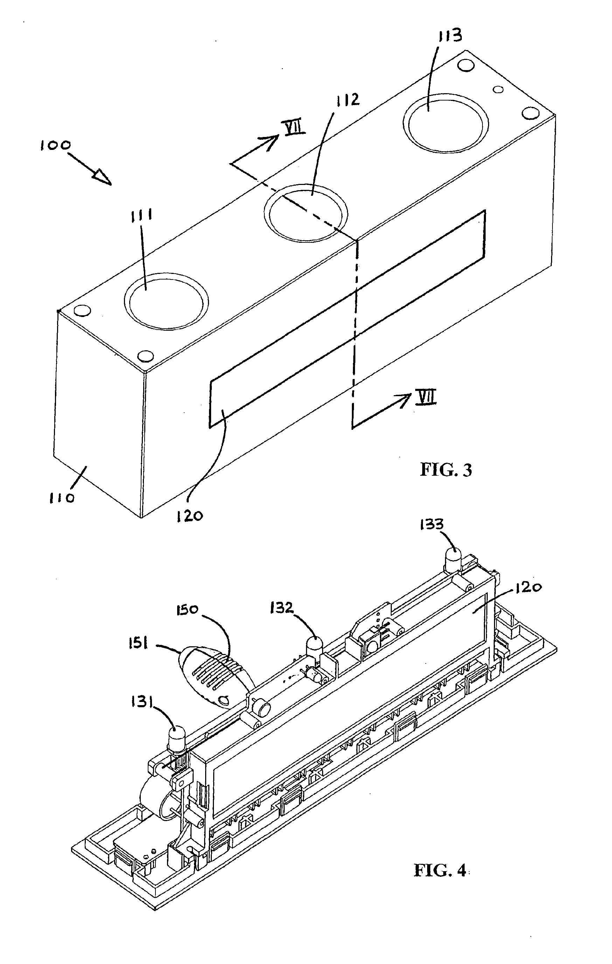

Figure 3 is a front perspective view of the base of Figure 1;
Figure 4 is a front perspective view of internal components of the base of Figure 3;

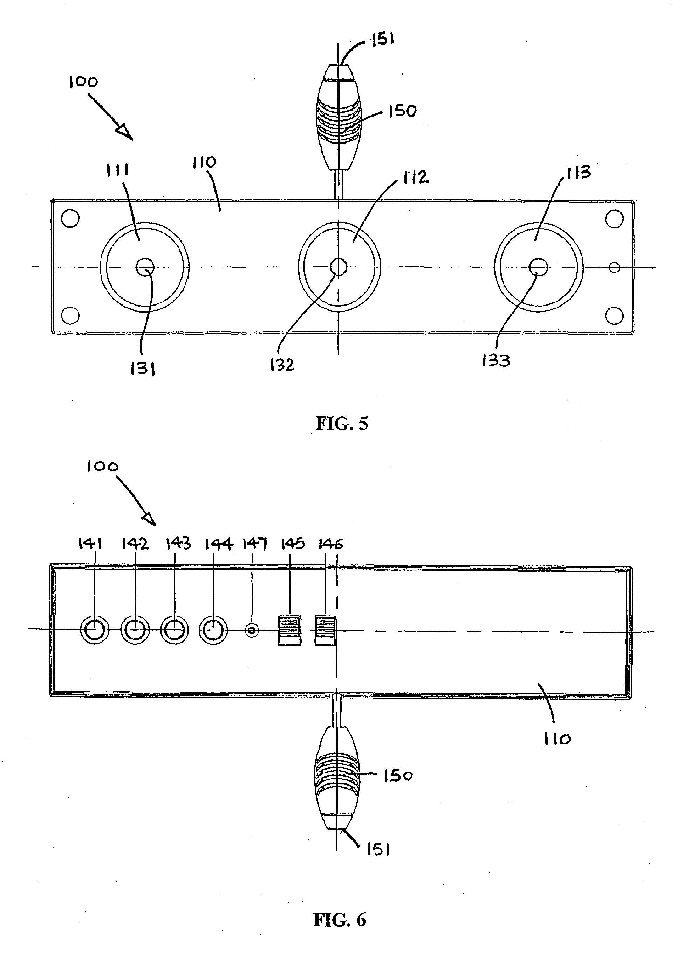

Figure 5 is a top plan view of the base of Figure 3;
Figure 6 is a bottom plan view of the base of Figure 3;
Figure 7 is a cross-sectional view of the base of Figure 3, taken along line VII-VII; and

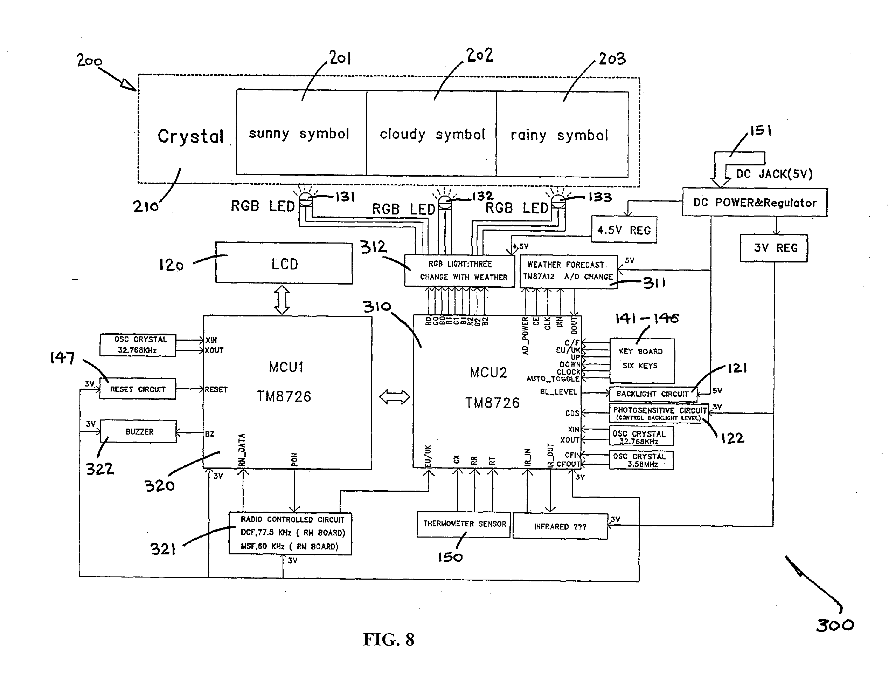

Figure 8 is a schematic functional block diagram of an operating circuit of the weather station of Figure 1.

### DETAILED DESCRIPTION OF PREFERRED EMBODIMENT

Referring to the drawings, there is shown a weather station embodying the invention for determining and indicating weather data including weather forecast, which comprises a base 100 and an indicator 200 on the base 100. The base 100 has a horizontal oblong rectangular housing 110, and the indicator 200 also has a horizontal oblong rectangular body 210 that matches with and is supported on the base 100 by resting thereon.

The base housing 110 has a top wall that is formed with a row of left, middle and right funnel-shaped recesses 111, 112 and 113 evenly and linearly along the length of the housing 110. On the front side of the housing 110, a built-in LCD display 120 is visible from inside the housing 110 through a transparent front wall thereof. On the bottom side of the housing 110, there is situated a row of clock key 141, up-arrow key 142, down-arrow key 143, °C/°F key 144, reset key 147, auto on/off switch 145 and EU/UK switch 146.

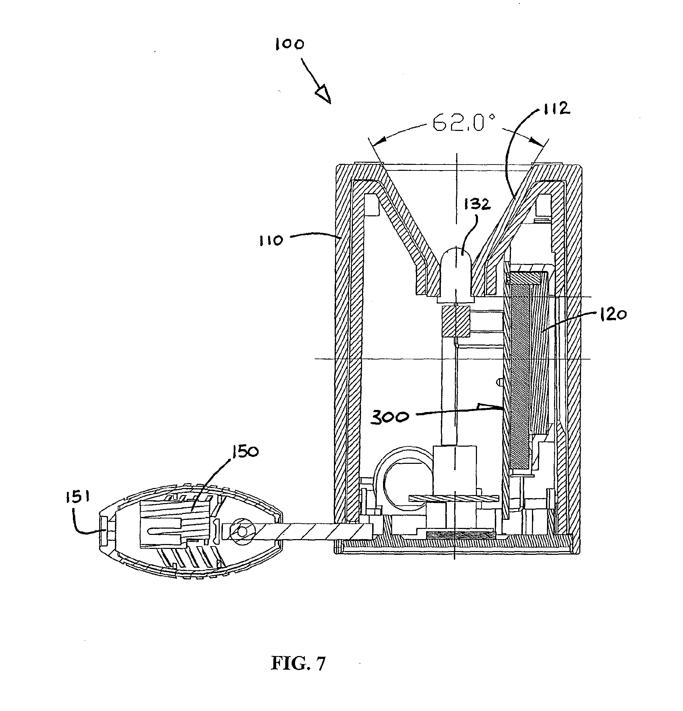

The base 100 incorporates a horizontal row of three tri-color RGB (red/green/blue) super bright light emitting diodes or LEDs 131, 132 and 133 which are mounted on an internal support such that they are located in respective bottom apex openings of the funnel-shaped recesses 111-113 (Figure 7), pointing upwardly to illuminate the indicator 200 on the base 100. The LEDs 131-133 are controlled and operated by a microprocessor-based operating circuit 300 in the base housing 110, and so is the LCD display 120.

The operating circuit 300 is built based on a main MCU (microprocessor control unit) 310 for operations and controls, and it includes a clock MCU 320 connected to the main MCU 310 for keeping time/date, etc. to be displayed on the LCD display 120 connected to clock MCU 320. Data relating to the current time and date (calendar) are obtained and/or updated from a radio controlled clock circuit 321 which operates based on auto time setting and synchronization by radio signal DCF-77 for Continental Central Europe or MSF-60 for UK (or WWVB-60 for USA) as selectable by using the EU/UK switch 146. The clock MCU 320 also provides a time alarm function (with snooze) via a piezo-electric buzzer 322. Both MCUs 310 and 320 are implemented by chips no. TM8726.

The LCD display 120 may be lit up by a yellow LED backlight circuit 121, whose backlight level is automatically controlled according to the output of a CDs (cadmium sulfide) photosensitive circuit 122 monitoring the ambient light intensity, to adjust the brightness of LCD display 120 for optimal reading. Both circuits 121 and 122 are connected to the main MCU 310.

One of the major functions of the operating circuit 300 is to make weather forecast and display the same using the indicator 200. Weather forecast is determined by a weather forecast IC 311 (implemented by chip no. TM87A12) connected to the main MCU 310. The weather forecast IC 311 incorporates a barometric sensor to monitor the atmospheric pressure whose change pattern is the primary factor for predicting the current and forthcoming weather conditions.

A temperature sensor 150 located outside the base housing 110 is connected to the main MCU 310 for measuring the indoor temperature, which may then be displayed on the LCD display 120, with or without animation. The indoor temperature is measurable in the range from -5°C to +50.0°C (23°F to 122.0°F) at a resolution of 0.1°C (0.2°F), and the unit of measurement may be selected by using the °C/°F key 144.

The temperature sensor 150 is protected in a small ellipsoidal shell, which also holds a DC jack 151 for connection to a 5V DC power source for supply of electrical power to the overall weather station.

The weather forecast IC 311 is programmed based on an appropriate algorithm to identify the weather forecast by one of three categories, namely "Sunny", "Cloudy" and "Rainy", for indication at the indicator 200 by means of a respective one of the LEDs 131-133.

In this regard, the LEDs 131-133 are driven by a driver circuit 312 under the control of the main MCU 310 in accordance with the output of the weather forecast IC 311. The driver circuit 312 has three outputs which are connected to the LEDs 131-133 respectively, each having three pins for controlling respective RGB components of the corresponding LED.

Referring to the indicator 200, its body 210 is made of a mass of transparent (or translucent) crystal or crystal-like material, wholly within which a horizontal row of three visual elements 201, 202 and 203 is located to indicate the weather conditions. The elements 201-203 are in the form of hollow graphical weather images (symbols) 201-203, namely a sun emitting sunrays, a cluster of clouds and falling raindrops, which graphically represent the "Sunny", "Cloudy" and "Rainy" forecast of the weather respectively. Such images 201-203 are 3-dimensional images which are engraved or etched by laser inside the mass of crystal material making the body 210, using a laser etching process as is generally known in the art.

The weather images 201-203 are aligned with the LEDs 131-133 respectively for illumination by the LEDs 131-133 selectively to indicate the predicted weather forecast. In the regard, the recesses 111-113 of base housing 110 that surround the LEDs 131-133 are funnel-shaped to collect and reflect the light of the LEDs 131-133 upwardly at the corresponding weather images 201-203, with minimum illumination upon the adjacent weather image or images.

The RGB LEDs 131-133 are capable of changing the color of its light dependent upon the (relative) magnitudes of driving currents supplied to its three internal component color LEDs or associated terminals. Utilizing this feature, each LED 131/132/133 is driven by the driver circuit 312 to change its colors according to a specific scheme. Due to the processing power limitation of the main MCU 310, each component color is divided into 128 levels, i.e. from 0 to 127. The color-changing scheme or sequences of change in colors (in red/green/blue or R/G/B) are:
"Sunny" (Red/Orange/Yellow)
   R127/G000/B000 • R127/G063/B000 •
   R127/G127/B000 • R127/G063/B000 • R127/G000/B000
"Cloud" (Green/Blue)
   R000/G103/B127 • R000/G000/B114 • R103/G000/B102 •
   R000/G000/B114 • R000/G103/B127
"Rain" (Blue/Purple)
   R000/G000/B127 • R000/G063/B127 • R000/G127/B127 •
   R000/G063/B127 • R000/G000/B127

Fade-in and fade-out transitions are introduced to turn on/off from one LED to another. For example, when the weather forecast status changes from "Sunny" to "Cloudy", the LED 131 for the "Sunny" image 201 will fade out in 1-2 seconds and the LED 132 for the "Cloudy" image will immediately fade-in in 1-2 seconds.

As the weather forecast indicator 200 is normally viewed from the front side, it is envisaged that the weather images 201-203 therein may be 2-dimensional symbols, or in a literal form i.e. the words "Sunny", "Cloudy" and "Rainy".

The subject invention provides a weather station that offers an interesting eye-catching light indication of weather forecast, particularly lifelike when graphical weather images are used and in a color-changing illuminated manner.

The invention has been given by way of example only, and various other modifications of and/or alterations to the described embodiment may be made by persons skilled in the art without departing from the scope of the invention as specified in the appended claims.

## Claims

1. A weather station for determining and indicating weather data including weather forecast, comprising:
a base;
at least one light source located in the base;
a microprocessor-based operating circuit provided in the base for operation and control, including determining weather data and operating the light source; and
an indicator supported on the base for illumination by the light source to indicate weather forecast determined by the operating circuit, the indicator comprising a plurality of elements for selective illumination by the light source to indicate a respective forecast of the weather.

2. The weather station as claimed in claim 1, wherein the indicator has a body made of a material selected from a transparent material and a translucent material.

3. The weather station as claimed in claim 2, wherein the elements are located wholly within the body of the indicator.

4. The weather station as claimed in claim 3, wherein the elements comprise respective hollow images formed within the body of the indicator, each image representing a respective forecast of the weather.

5. The weather station as claimed in any one of claims 1 to 4, wherein the elements are graphical images graphically representing sunny, cloudy and rainy forecast of the weather respectively.

6. The weather station as claimed in claim 5, wherein the indicator has a body made of a mass of material selected from a transparent material and a translucent material, and the graphical images comprise 3-dimensional images etched by laser inside the mass of material of the indicator.

7. The weather station as claimed in any one of claims 1 to 4, wherein the light source comprises a light emitting diode.

8. The weather station as claimed in any one of claims 1 to 4, including a plurality of light sources in the base for illuminating the elements respectively.

9. The weather station as claimed in claim 8, wherein the light sources are located in the base at different positions, and the elements are aligned with the light sources for illumination by the light sources respectively.

10. The weather station as claimed in claim 8, wherein the light sources are arranged in a linear row.

11. The weather station as claimed in any one of claims 1 to 4, wherein the light source is capable of emitting light of different colors, and the operating circuit operatively changes the color of the light of the light source to illuminate the elements in a color-changing manner.

12. The weather station as claimed in claim 11, wherein the light source comprises a tri-color RGB light emitting diode.

13. The weather station as claimed in any one of claims 1 to 4, wherein the base includes a built-in display operated by the operating circuit for displaying weather data determined by the operating circuit.

14. The weather station as claimed in claim 13, wherein the operating circuit includes a temperature sensor for sensing temperature as one of weather data determined by the operating circuit, the temperature being operatively displayed on the display.

15. The weather station as claimed in any one of claims 1 to 4, wherein the operating circuit further includes a clock circuit for keeping time, the time being operatively displayed on the display.

16. The weather station as claimed in any one of claims 1 to 4, wherein the operating circuit includes a clock circuit for keeping time, and the base includes a built-in display operated by the operating circuit for displaying time from the clock circuit.
